# EUROPEAN PATENT APPLICATION

(11) **EP 1 061 298 A1**
(43) Date of publication of application: **20.12.2000**
(21) Application number: 00202073.3
(22) Date of filing: 13.06.2000
(51) Int. Cl.: F16K 1/22

(54) **Valve and method utilizing such valve for controlling an air flow through a duct**

(30) Priority: 14.06.1999 NL 1012316
(71) Applicant: Zwaan, Adrianus Jacobus, NL-2252 BD Voorschoten (NL)
(72) Inventor: Zwaan, Adrianus Jacobus, NL-2252 BD Voorschoten (NL)
(74) Representative: Prins, Adrianus Willem

(57) **Abstract**

A control valve (1) for an air flow through a duct generated by a speed-controlled ventilator and comprising a tubular valve housing (1a,1b) with an open passage and a plate-shaped, freely rotatable valve body (4). The plate-shaped valve body has a surface which, in a position of rest closing the open passage as much as possible, does not cover a part of the open passage, a force, for instance generated by a weight or a spring, being present which urges the valve body in the direction of the position of rest. The force can be adjusted such that at the lowest speed of the ventilator motor the valve body is just not pressed out of its position of rest by the air flow generated in the valve housing, and when the speed is increased, the valve body is pivoted by this air flow such that the non-covered part of the open passage is increased until the desired amount of air is passed.

## Description

The invention relates to a valve for controlling an air flow through a duct provided with a tubular valve housing with an open passage and a plate-shaped valve body which is mounted in the tubular valve housing for free rotation about a shaft from a position of rest closing the open passage as much as possible to a position releasing the open passage as much as possible, a force being present which urges the valve body in the direction of the position of rest, and to a method for controlling an air flow through a duct utilizing such valve.

A valve as described in the preceding paragraph is known from GB-A-1 426 771. The valve body is rotatable about a rotating shaft arranged near the lower edge of the valve body and is pressed to its closed position by a weight placed outside of the valve housing on a lever. The rotating position of the valve body and the pressure difference over the valve define the throughput. The position of the valve body may then vary, depending on the air flow through the valve housing, between a position nearly completely releasing the passage of the duct and a position completely closing this passage. The air flow in the duct can be produced by natural draft or by a ventilator. When producing the air flow via a ventilator, the throughput can also be influenced, instead of with a valve, by controlling the motor speed of this ventilator, which, for considerations of energy saving, is therefore preferable to controlling via a resistance-producing valve.

JP-A-07 174028 discloses a valve comprising an eccentrically placed valve body provided with a cutout, so that in the position in which the valve body is closed as completely as possible, a passage opening remains present. It involves an inlet valve for an internal combustion engine, the valve body of which, however, is not freely rotatable, but is controlled by an operating mechanism which can place the valve body in a closed, a semi-open and an open position.

The use of a ventilator for producing an air flow will be particularly preferred if the throughput must be controlled independently of natural conditions, for instance when ventilating a building in dependence on the number of persons present therein and the conditions of use, such as cooking, showering, etc. In particular in the last-mentioned field of application, it will have to be possible to adjust the throughput controlled by measuring and controlling means between rather wide limits, for instance between 10 and 70 dm³/s. This may cause problems when using conventional ventilators. The motor of such a ventilator requires a minimum voltage to start. For many motors used, which in the maximum position can provide a throughput of 70 dm³/s, this means, however, that in such inexpensive, controllable ventilators the minimum voltage required for starting in the lowest position results in a throughput of more than 20 dm³/s. A valve is still required yet to reduce the throughput to the desired value below those more than 20 dm³/s, which valve can be completely open above those more than 20 dm³/s, because then the throughput can be controlled by controlling the speed. Since this kind of conditions almost exclusively involve automatically controlled systems, the control of the valve position will also have to occur automatically. This is connected with additional operations and cost as a result of the necessity of providing additional controlling equipment and an additional motor having a correspondingly additional energy consumption for automatically controlling the valve position.

It is an object of the invention to provide a valve of such design that it can be realized at a minimum of operations and cost and in an energy-saving manner, while retaining an automatic adjustment of its control position.

According to the invention, this is achieved by a control valve of the type described in the opening paragraph if the plate-shaped valve body has a surface which, in a position of rest closing the open passage as much as possible, does not cover a part of the open passage. Through these measures, the valve at least always has a free passage which, depending on the employed ventilator motor, is adjustable to the desired smallest throughput in the lowest switching-on position. The force urging the valve body in the direction of the position of rest must then be such that the valve body, in spite of being mounted in the valve housing for free rotation via the shaft, just remains in this position of rest when the ventilator motor is switched on in the lowest position. It is thus effected that in this lowest position the valve exactly passes the desired throughput. When a larger throughput is demanded, this can be realized by increasing the speed of the ventilator motor. Consequently, the greater air flow exerts a higher pressure on the valve body, as a result of which the force urging the valve body to the position of rest is no longer sufficient to keep the valve body in this position of rest, so that the valve body comes to pivot and thus increases the non-covered part of the open passage and, accordingly, the throughput. The speed of the ventilator motor can be controlled with the measuring and control means, which are present anyway, in such a manner that the desired throughput is adjusted by means of the adjustment of the corresponding pivoting position of the valve via the generated air flow. After the valve body has been pivoted to the position parallel to the air flow and hardly producing a resistance, the complete throughput control takes place via the control of the speed of the ventilator motor.

When according to a preferable embodiment of the invention the axis of the shaft extends substantially centrally through the open passage and the valve body is of asymmetric design relative to the axis, the force of gravity can be advantageously used to generate the force urging the valve body to the position of rest, while in the open position the valve body is in a position which is completely directed in the longitudinal direction of the duct and the valve housing and involves the lowest possible resistance.

A minimum free passage always present can be created in the position of rest of the valve body by providing at least one opening in the valve body. According to a further embodiment of the invention, however, it is preferred that the valve body has a circumference which, in the position of rest, partly substantially sealingly connects to a wall of the valve housing defining the open passage and is partly located at a distance therefrom.

When according to a further embodiment of the invention the open passage has a circular cross-section and the valve body is composed of a semi-circular part having a diameter equal to that of the open passage and a part having a smaller surface, for instance a circular segment-shaped part with a chord equal to the diameter of the open passage, a valve can be simply but effectively realized, which has a valve body which, in the position of rest, extends perpendicularly to the open passage of the valve housing.

Through a suitable design and weight distribution relative to the axis of rotation, the valve body can be of such design that the force of gravity provides the desired restoring force to the position of rest. It is also possible to generate the desired restoring force by means of spring force. However, to enable a relatively simple adaptation of a standard valve to diverse conditions of use and ventilators, it is preferable according to a further embodiment of the invention that at a distance from the axis of the shaft the valve body is provided with at least one balance weight, which at least one balance weight is preferably placed on a part of the valve body which, in the position of rest, connects to the wall defining the open passage. When the valve body pivots, each balance weight will come closer to the axis of rotation, as a result of which the restoring force to the position of rest decreases. This to be regarded as an advantage of the present invention, because this renders it possible to cause the valve body, after it has left its position of rest, to pivot increasingly faster to its completely open position producing the lowest possible resistance to thus make the throughput control independent of the valve body as soon as possible.

When the valve body is installed in a horizontal or inclined duct, it will be automatically urged to its position of rest through a proper balancing. This will be different for a vertical duct with a valve body extending transversely thereto. In this situation the valve body will tend to hang in a vertical, completely open position parallel to the axis of the duct. Hence, inter alia in these circumstances, it is preferable according to a further embodiment of the invention that the valve body, in its position of rest, lies against a stop provided in the valve housing. At an increased speed a valve body resting on the stop at an upward air flow will pivot upwards from the stop in the direction of flow and a valve body pressed against the stop from below at a downward air flow will pivot downwards in the direction of flow until a position which is vertical in both cases. To prevent the possibility of the valve body becoming inactive as a result of the pivotation past this vertical position, it is preferred according to a further elaboration of the invention that a further stop is so arranged in the valve housing and the valve body is of such design that rotation of the valve body from its position of rest lying against the stop is possible, which rotation of the valve body is limited by the further stop to at most 180°. Thus a valve construction operating on two sides is obtained.

The invention also relates to a method for controlling an air flow through a duct using a valve as referred to above, and in which the air flow is produced by means of a ventilator with a motor, the speed of which adjustable. To enable reduction of the minimum throughput to be supplied by the ventilator to a desired smaller value, it is provided according to the invention that the force with which the valve body is urged in the direction of the position of rest, is adjusted such that when switching on the motor at its lowest speed position, the valve body is just not pressed out of its position of rest by the air flow produced in the duct, and at an increase in the speed the valve body is pivoted by this air flow in a controlled manner such that the part of the open passage not covered by the valve body is increased in dependence on the speed.

With reference to the practical examples shown in the drawing, the valve and the method for controlling an air flow according to the invention will now be explained in more detail, only by way of example. In this drawing:
Fig. 1 shows a valve according to the invention in cross-section;
Fig. 2 shows the valve of Fig. 1 in top view;
Fig. 3 diagrammatically shows, in cross-section, a modified embodiment of the valve of Fig. 1;
Fig. 4 diagrammatically shows, in cross-section, a valve according to the invention for a horizontal duct;
Fig. 5 diagrammatically shows, in cross-section, a valve according to the invention for an inclined duct;
Fig. 6 diagrammatically shows, in cross-section, a modified embodiment of the valve of Fig. 5;
Fig. 7 diagrammatically shows, in top view, a further embodiment of the valve according to the invention; and
Fig. 8 diagrammatically shows, in top view, yet another embodiment of the valve according to the invention.

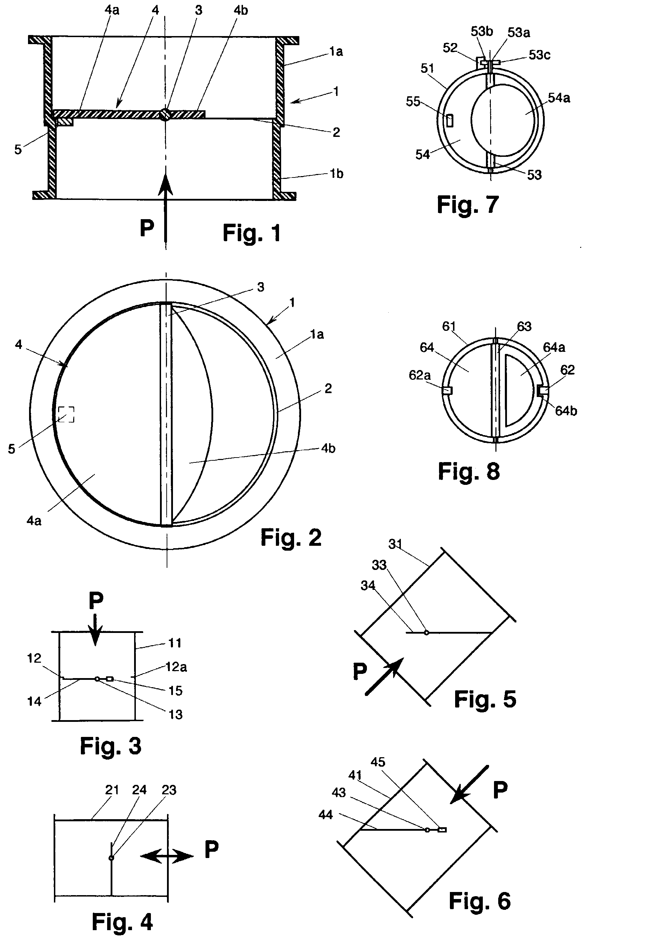

Figs. 1 and 2 show a valve which comprises a housing 1 composed in one piece of a tubular part 1a and a tubular part 1b concentrically arranged with and having a slightly smaller diameter than the part 1a, as a result of which a stepped transition 2 is formed at the place at which the part 1a connects to the part 1b. Mounted in the valve housing 1 for free rotation via a shaft 3 is a valve body 4 composed of a semi-circular segment 4a, the radius of which is slightly smaller than the inner radius of the tubular part 1a, and a segment 4b in the form of a circular segment, the surface of which is smaller than half the free passage of the tubular part 1a, and which two segments 4a and 4b extend in a similar plane on both sides of the shaft 3. The valve body 4 is mounted in the valve housing 1 via the shaft 3 in such a manner that the segment 4a, with the underside of its curved free outer edge area, lies on the stepped transition 2, in which position the valve body 4 extends perpendicularly to the axis of the valve housing 1. Although the valve body 4, as a result of its asymmetric form, is kept in contact with the stepped transition 2 by the force of gravity, this contact is intensified by a weight 5 fastened to the valve body 4.

At their free ends remote from each other, the tubular parts 1a and 1b are provided with flanges, with which the valve can be mounted in a duct before or after a ventilator, not shown. It is observed that this mounting preferably must be carried out in the position shown in Fig. 1, that is to say, the valve is preferably intended to be incorporated into a substantially vertical duct.

The operation of the above-described valve, mounted in a vertical duct, in which, using a ventilator or a similar apparatus, a variable, upward air flow in the direction of the arrow P can be produced by a change of speed of the driving motor, is as follows.

When the ventilator motor is switched off, the valve body 4 is in the substantially horizontal position, shown in Fig. 1, in which the valve body, with its segments 4a and 4b, closes the free passage of the valve housing 1 as much as possible. When the ventilator motor is switched on in its lowest speed position, the weight distribution of the valve body 4 relative to the shaft 3, including the weight 5, is selected such that the position of the valve body 4 remains unchanged in spite of the air flow in the direction of the arrow P. This is on the assumption that in its lowest adjustable speed position the ventilator supplies an amount of air larger than is desired. The surface of the segment 4b is selected such that in this lowest speed position it leaves clear such a part of the passage of the valve housing 4 that the valve 1 exactly passes the desired amount of air.

When a larger amount of air is desired, this can be realized by increasing the speed of the ventilator motor. This is connected with an increase of pressure in the duct, which causes the valve body 4 to pivot clockwise, as a result of which the curved circumferential edge of the segment 4a is released from the stepped transition 2 and air can also flow between the above circumferential edge and the wall of the tubular part 1a. By controlling the speed of the ventilator motor, in dependence on a throughput measurement beyond the valve body 4, an equilibrium pivoting position of the valve body 4 can be achieved, which corresponds to the above higher, desired amount of air.

At a specific air flow, the valve body 4 will reach a six o'clock position, that is to say, with the segment 4b directed vertically upwards and the segment 4b vertically downwards, in which position the valve is substantially no longer operative. A further amount control must then only be carried out by changing the speed of the ventilator motor. It will be clear that the valve must be arranged such that this six o'clock position is reached after a speed at which the desired amount of air is adjustable by simply and solely controlling this speed. Only in explanation thereof, the following example is given.

When ventilating a building in dependence on the use made of it, the desired amount of air can vary between, for instance, 10 and 30 dm³/s. Speed-controlled ventilator motors capable of covering this whole range are rather expensive. Appreciably less expensive are motors which, for instance, can cope with a range of 20 to 70 dm³/s. The problem range of 10 to 20 dm³/s is the range in which a valve according to the invention may have its advantageous effect. Above the limit of 20 dm³/s only speed-controlled operations can be carried out, and the valve body 4 can be in the above six o'clock position.

In this connection, it is pointed out that the speed control is effected by a throughput measurement. The same throughput measurement can also be used for the speed control for reaching the above equilibrium pivoting position of the valve body, so that the control of the amount of air by means of the valve body requires no additional provisions but the provision of this valve.

It is observed that in the six o'clock position the valve body 4 is in unstable equilibrium. When the ventilator motor is switched off, the case may occur that the valve body 4 keeps on rotating clockwise, instead of rotating back anti-clockwise. In that case, however, the valve will continue to be effectively operative in the same desired manner, because the stepped transition 2 extends around the whole inner circumference of the valve housing 1, so that then, too, the valve body 4 will again reach a position of rest, although a mirrored position relative to the position shown in Fig. 1.

Fig. 3 diagrammatically shows, in cross-section, a valve to be incorporated in a vertical duct with a downward air flow. The valve comprises a valve housing 11 with a constant passage, in which a valve body 14 is bearing-mounted for pivotation about a shaft 13. Again, the valve body 14 is of asymmetric design relative to the shaft 13, so that in the horizontal position shown, that is to say the position closing the passage of the valve housing 11 as much as possible, it leaves a part of this passage clear. Arranged in the valve housing 11, at the level of the shaft 13, is a stop 12, against the underside of which the valve body 14 butts. This position of the valve body is maintained by a weight 15, which is fixed to the valve body 14 on the, relative to the stop 12, other side of the shaft 13. Depending on the pressure exerted by the downward air flow according to the arrow P, the valve body 14 can be pressed anti-clockwise into a farther opened position for controlling the amount of air passed, as described above with reference to Figs. 1 and 2. Should, when the air flow decreases or falls out, the valve body 14 swing through anti-clockwise, it will butt against a stop 12a diametrically opposite the stop 12 and the correct, desired operation will therefore be maintained.

Contrary to the circular stepped transition 2 in Fig. 1, the stops 12 and 12a are local stops, which can be provided in any desired and suitable manner, for instance by impressing the side wall of the pipe, screwing in a screw, providing a pop rivet, etc.

Fig. 4 diagrammatically shows a valve for installation in a horizontal duct. This valve comprises a valve housing 21 with a constant passage, in which a valve body 24 is bearing-mounted for free rotation about a shaft 23. Again, the valve body 24 is of asymmetric design relative to the shaft 23, as a result of which it comes to hang vertically downwards, in which position the free passage of the valve housing 21 is closed by the valve body 24 as much as possible, but remains partly open, in particular in its upper area. An air flow directed to the left or the right, indicated by a double arrow P, through the valve housing 21 can cause the valve body 24 to pivot again for controlling the desired amount of air passed, as described above. In view of the position of rest of the valve body 24 hanging vertically downwards, this embodiment does not require a stop in the valve housing 21, since the valve body 24, when an air flow falls out, will always return to the position shown. Although not shown, and not strictly necessary either, the valve body 24 could also be provided with a balance weight at its, in the position of rest, lower edge. Another possibility could be a well-known rotating spring, which always tries to urge the valve body 24 back to its vertical position.

Fig. 5 diagrammatically shows a valve for installation in an inclined duct for an upward air flow according to the arrow P. This valve comprises a valve housing 31 with a constant passage, in which a valve body 34 is bearing-mounted for free rotation about a shaft 33. Again, the valve body 34 is of asymmetric design relative to the shaft 33, such that in a horizontal position it butts with an edge against the inclined lower wall of the valve housing 31, in which position the free passage of the valve housing 31 is closed by the valve body 34 as much as possible, but also remains partly open. An inclined, upwardly directed air flow, indicated by the arrow P, through the valve housing 31 will cause the valve body 34 to pivot for controlling the desired amount of air passed, as described above. In this embodiment, no stop is required either and an additional force towards the position of rest shown in Fig. 5 may optionally be exerted on the valve body 34 by a weight or a spring.

Fig. 6 diagrammatically shows a valve for installation in an inclined duct for a downward air flow according to the arrow P. This valve comprises a valve housing 41 with a constant passage, in which a valve body 44 is bearing-mounted for free rotation about a shaft 43. Again, the valve body 44 is of asymmetric design relative to the shaft 43, but contrary to what is shown in Fig. 5, it is arranged such that in a horizontal position it butts with an edge against the inclined upper wall of the valve housing 41, a weight 45 being present, which always tries to push the valve body 44 back to this position. In this position the free passage of the valve housing 41 is closed by the valve body 44 as much as possible, a part of this passage remaining open again. An inclined, downwardly directed air flow, indicated by the arrow P, through the valve housing 41 causes the valve body 34 to pivot for controlling the desired amount of air passed, as described above. In this embodiment, no stop is required either.

Fig. 7 shows, in top view, a valve which can be compared with the valve shown in Fig. 2 and comprises a valve housing 51, in which a valve body 54 is bearing-mounted for free rotation about a shaft 53. The valve body 54 is a circular disk part having a diameter smaller than the inner diameter of the valve housing 51. The valve housing 54 is provided with an opening 54a, which is asymmetric relative to the shaft 53. Outside of the valve housing 51, the shaft 53 is extended on one side with a journal 53a, which supports an arm 53b which, in the position of rest of the valve body 54, that is to say in the position in which the passage of the valve housing 51 is closed as much as possible, butts against a stop 52 fixed to the valve housing 51. The valve body 54 is urged to this position of rest by a weight 55. A second arm 53c, located diametrically opposite the first arm, defines, together with the stop 52, the rotated-through position of rest of the valve body 54.

Fig. 8 shows, in top view, a valve which can be compared with the valve shown in Fig. 3 and comprises a valve housing 61, in which a valve body 64 is bearing-mounted for free rotation about a shaft 63. The valve body 64 is a circular disk part having a diameter smaller than the inner diameter of the valve housing 61. On one side of the shaft 63, the valve housing 64 is provided with an opening 64a in the form of a circular segment. In the position of rest, the valve body 64 lies against a stop 62, to which position the valve body 64 is urged by a weight or spring, not shown. Furthermore, a through-rotation stop 62a is present, while the side of the valve body 64 provided with the opening 64a is provided with a recess 64b, so that this side of the valve body 64, when pivoting, can unimpededly pass the stop 62a and, when the valve body rotates through, the stop 62.

It is self-evident that many modifications and variants are possible within the scope of the invention as laid down in the appended claims. Although reference has always been made to a valve housing having a circular cross-section with a centrally placed shaft, it will be clear that the valve housing may also have a rectangular or square cross-section and an asymmetric shaft or even a shaft placed at the wall of the valve housing. It is further observed that the position of rest is understood to mean the position in which the valve body is when the ventilator motor is switched on in the lowest speed position; therefore, the position in which the desired minimum amount of air is passed. In this position of rest, the passage in the valve housing must be partly open.

## Claims

1. A valve for controlling an air flow through a duct provided with a tubular valve housing with an open passage and a plate-shaped valve body which is mounted in the tubular valve housing for free rotation about a shaft from a position of rest closing the open passage as much as possible to a position releasing the open passage as much as possible, a force being present which urges the valve body in the direction of the position of rest, characterized in that the plate-shaped valve body has a surface which, in a position of rest closing the open passage as much as possible, does not cover a part of the open passage.

2. A valve according to claim 1, characterized in that the axis of the shaft extends substantially centrally through the open passage and the valve body is of asymmetric design relative to the axis.

3. A valve according to claim 1 or 2, characterized in that the valve body has a circumference which, in the position of rest, partly substantially sealingly connects to a wall of the valve housing defining the open passage and is partly located at a distance therefrom.

4. A valve according to claim 3, characterized in that the open passage has a circular cross-section and the valve body is composed of a semi-circular part having a diameter equal to that of the open passage and a part having a smaller surface, for instance a circular segment-shaped part with a chord equal to the diameter of the open passage.

5. A valve according to any of the preceding claims, characterized in that at a distance from the axis of the shaft the valve body is provided with at least one balance weight.

6. A valve according to claim 5, characterized in that the at least one balance weight is placed on a part of the valve body which, in the position of rest, connects to the wall defining the open passage.

7. A valve according to any of the preceding claims, characterized in that the valve body, in its position of rest, lies against a stop provided in or near the valve housing.

8. A valve according to claim 7, characterized in that a further stop is so arranged in the valve housing and the valve body is of such design that rotation of the valve body from its position of rest lying against the stop is possible, which rotation of the valve body is limited by the further stop to at most 180°.

9. A method for controlling an air flow through a duct using a valve according to any of the preceding claims, in which the air flow is produced by means of a ventilator with a motor, the speed of which adjustable, characterized in that the force with which the valve body is urged in the direction of the position of rest, is adjusted such that when switching on the motor at its lowest speed position, the valve body is just not pressed out of its position of rest by the air flow produced in the duct, and when the speed is increased, the valve body is controlled by this air flow such that the part of the open passage not covered by the valve body is increased in dependence on the speed.
